(19) Europäisches Patentamt
European Patent Office
Office européen des brevets

(11) **EP 2 515 015 B1**

(12) **EUROPEAN PATENT SPECIFICATION**

(45) Date of publication and mention
of the grant of the patent:
**30.03.2016 Bulletin 2016/13**

(51) Int Cl.:
*F16K 31/52* *(2006.01)*    *F16K 11/16* *(2006.01)*
*F16K 31/40* *(2006.01)*    *F25B 41/04* *(2006.01)*

(21) Application number: **12164522.0**

(22) Date of filing: **18.04.2012**

(54) **DIRECTION SWITCHING VALVE**

RICHTUNGSSCHALTVENTIL

VALVE DE CHANGEMENT DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2011 JP 2011096419**

(43) Date of publication of application:
**24.10.2012 Bulletin 2012/43**

(73) Proprietor: **Fujikoki Corporation
Tokyo 158-0082 (JP)**

(72) Inventors:
• **Kannoo, Takeshi
Setagaya-ku, Tokyo 185-0082 (JP)**

• **Arai, Yusuke
Setagaya-ku, Tokyo 158-0082 (JP)**
• **Yamashita, Masashi
Setagaya-ku, Tokyo 185-0082 (JP)**

(74) Representative: **Schweiger, Martin
Schweiger & Partners
Intellectual Property Law Firm
Elsenheimer Strasse 1
80687 München (DE)**

(56) References cited:
**EP-A1- 2 182 260      WO-A1-2010/141013
FR-A5- 2 211 097      GB-A- 338 341
GB-A- 1 223 466      GB-A- 1 549 195
JP-A- 2011 043 240**

**Description**

The present invention relates to a direction switching valve which is preferable to be used in a heat pump type heating and cooling system or the like, and more particularly to a direction switching valve which has one inflow port and two outflow ports, and can selectively open and close these two outflow ports.

In the heat pump type cooling and heating system such as a car air conditioner or the like, there is a case that it is demanded to simultaneously distribute a refrigerant from a compressor to two heat exchangers, and a conventional structure is made such as to respond to the needs mentioned above by using two electromagnetic valves (ON/OFF valves) or the like, as seen in, for example, Japanese Unexamined Patent Publication No. 9-295506 (refer particularly to electromagnetic valves 4 and 13 in Fig. 2).

Further, as a direction switching valve, a three way switching valve has been well known, which is structured such as to have one inflow port and two outflow ports, and carry out a switching of a direction (a flow path) by selectively opening and closing two outflow ports by rotating a valve body on the basis of a rotation drive source such as a stepping motor or the like.

However, in the method using two electromagnetic valves, it is necessary to maintain both the two electromagnetic valves in a full-open state at a time of simultaneously distributing a refrigerant from a compressor to two heat exchangers, and it is accordingly necessary to continuously excite two electromagnetic valves for a long time, so that there is such a problem that an electric power consumption is enlarged or the like.

Further, since a conventional general three way switching valve structured such as to carry out a switching of a direction (a flow path) by selectively opening and closing two outflow ports by rotating a valve body on the basis of a rotation drive source such as a stepping motor or the like can not fully open both the two outflow ports generally, in addition to such a problem that it takes a comparatively long time to switch the flow path, it can not respond to the needs mentioned above (the simultaneous distribution to two heat exchangers of the refrigerant from the compressor). There is such a problem that if it can do, it is necessary to rotate the rotation drive source such as the stepping motor or the like for a significantly long time until both the outflow ports are fully opened.

GB1549195A discloses a control valve unit. The control valve unit has a piston, a poppet valve member, a stem portion, and an exhaust passage.

WO2010/141013 A1 discloses a valve for a work exchanger device.

EP2182260A1 discloses a multi-way selector valve.

GB1223466A discloses an improved selector valve for controlling the operation of separate hydraulic systems.

FR2211097A5 discloses a valve for a heating circuit of a vehicle.

The present invention is made by taking the actual condition mentioned above into consideration, and an object of the present invention is to provide a direction switching valve which has one inflow port and two outflow paths, is structured such as to carry out a switching of a direction (a flow path) by selectively opening and closing two outflow ports on the basis of a rotation drive source such as a stepping motor or the like, can fully open both the two outflow ports, and can achieve a speedup of a flow path switching and an energy saving.

In order to achieve the object mentioned above, a direction switching valve in accordance with the present invention is basically provided with a valve main body having an inflow port and two outflow ports, two control valves each of which is arranged between the inflow port and two outflow ports, and a single rotation drive source for driving so as to open and close the two control valves, wherein the two outflow ports are selectively openable and closable by the two control valves, at least one of the two control valves is constructed by a pilot type valve, and an inverse drive mechanism driving the two control valve so as to open and close in an inverse direction to each other is provided between the rotation drive source and the two control valves.

In accordance with a preferable aspect, the two control valves can be both fully opened by stopping the inverse drive mechanism in a specific state.

The pilot type control valve is preferably provided with a piston type main valve body, a fitting insertion chamber to which the main valve body is slidably fitted and inserted, the fitting insertion chamber is provided in the valve main body and is comparted into a back pressure chamber and a main valve chamber by the main valve body, a pilot passage provided in the main valve body for releasing a pressure in the back pressure chamber to the outflow port, a pilot valve body for opening and closing the pilot passage, and a tubular guide portion to which the pilot valve body is slidably fitted and inserted, wherein a sliding surface gap formed between the pilot valve body and the tubular guide portion is used as a pressure equalizing passage which conducts the pressure in the inflow port or the main valve chamber to the back pressure chamber.

In accordance with the other preferable aspect, a seesaw type oscillating arm serving as the inverse drive mechanism is provided between the two control valves and the rotation drive source.

In accordance with the other preferable aspect, a gear train serving as the inverse drive mechanism is provided between the two control valves and the rotation drive source.

In accordance with the other preferable aspect, a speed reducing mechanism is provided between the rotation drive source and the inverse drive mechanism.

In accordance with the other preferable aspect, the speed reducing mechanism is constructed by a paradox planetary gear reduction mechanism.

In accordance with the other preferable aspect, a stepping motor is used as the rotation drive source.

In accordance with the other preferable aspect, a stepping motor is used as the rotation drive source, and the paradox planetary gear reduction mechanism is provided additionally within the stepping motor.

In the preferable aspect of the direction switching valve in accordance with the present invention, since the pilot type valve structure is employed as the control valve, and the inverse drive mechanism (for example, the seesaw type oscillating arm) driving two control valves so as to open and close in the inverse direction to each other is arranged between the rotation drive source such as the stepping motor or the like and two control valves, it is possible to selectively open and close two outflow ports, for example, by rotating (oscillating) the seesaw type oscillating arm within a predetermined angle range, and it is possible to fully open both the two control valves (two outflow ports) by stopping the seesaw type oscillating arm at a specific rotation (oscillation) position, for example, at a horizontal position.

Accordingly, the direction switching valve in accordance with the present invention can be used in place of two electromagnetic valves in the heat pump type cooling and heating system which is demanded to simultaneously distribute the refrigerant from the compressor to two heat exchangers, as mentioned above. In this case, in the direction switching valve in accordance with the present invention, since the full-open state can be maintained without exciting, after two outflow ports are both fully opened, it is possible to achieve an energy saving in comparison with the case that two electromagnetic valves are used.

Further, since the pilot type valve structure is employed as the control valve, it is possible to open and close the outflow port having a large bore diameter by a small drive force, and it is possible to achieve a high lift of the pilot valve body and the main valve body by using the seesaw type oscillating arm or the like as the inverse drive mechanism. Further, since the opening and closing of two control valves can be achieved only by rotating the seesaw type oscillating arm at a small angle (for example, 40 degree or less), it is possible to rapidly carry out the flow path switching in comparison with the conventional type three way switching valve or the like even by using the stepping motor having the comparatively compact structure (the small output) as the rotation drive source, whereby a flow path switching response is improved.

Further, if the speed reducing mechanism is provided between the rotation drive source and the inverse drive mechanism, a valve opening less occurs even if the inverse pressure is applied at a time of the valve closing.

Further, since the paradox planetary gear reduction mechanism is not rotated even if a torque is applied to an output shaft side, the valve is not opened even if a strong inverse pressure is applied at a time of the valve closing in the case that the paradox planetary gear reduction mechanism is employed as the speed reducing mechanism, and it is possible to maintain a secure valve closing performance.

Fig. 1 is a front elevational view showing an embodiment (a first embodiment) of a direction switching valve in accordance with the present invention;

Fig. 2 is a cross sectional view along a line X-X in Fig. 1;

Fig. 3 is a cross sectional view along a line Y-Y in Fig. 2 in which a first outflow port is fully opened, and a second outflow port is fully closed;

Fig. 4 is a cross sectional view showing an operating state of the first embodiment in which the first outflow port is fully opened, and the second outflow port is in a transient time from the full close to a full open;

Fig. 5 is a cross sectional view showing an operating state of the first embodiment in which the first outflow port and the second outflow port are both fully opened;

Fig. 6 is a cross sectional view showing an operating state of the first embodiment in which the first outflow port is fully closed, and the second outflow port is fully opened; and

Fig. 7 is a cross sectional view showing a second embodiment of the direction switching valve in accordance with the present invention.

A description will be given below of embodiments in accordance with the present invention with reference to the accompanying drawings.

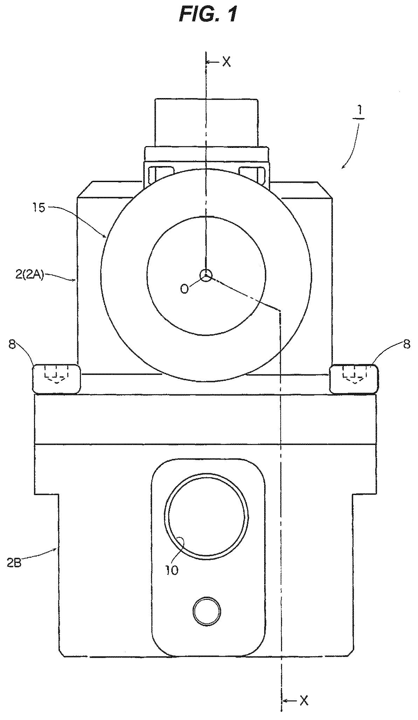

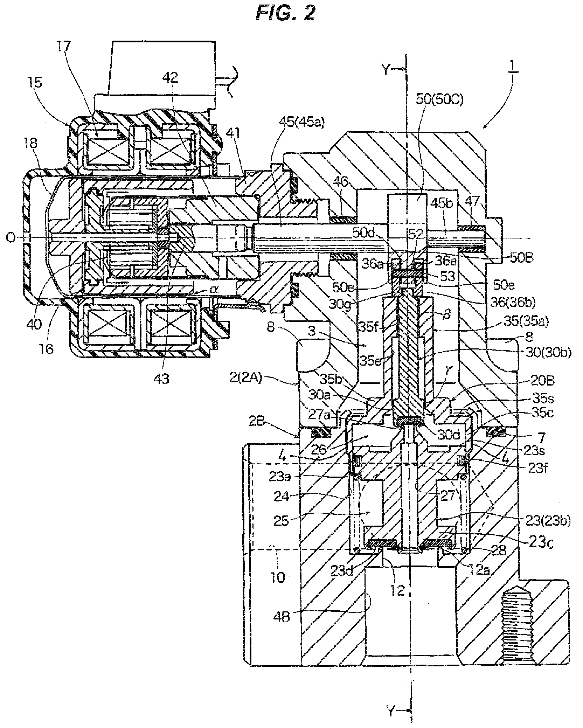

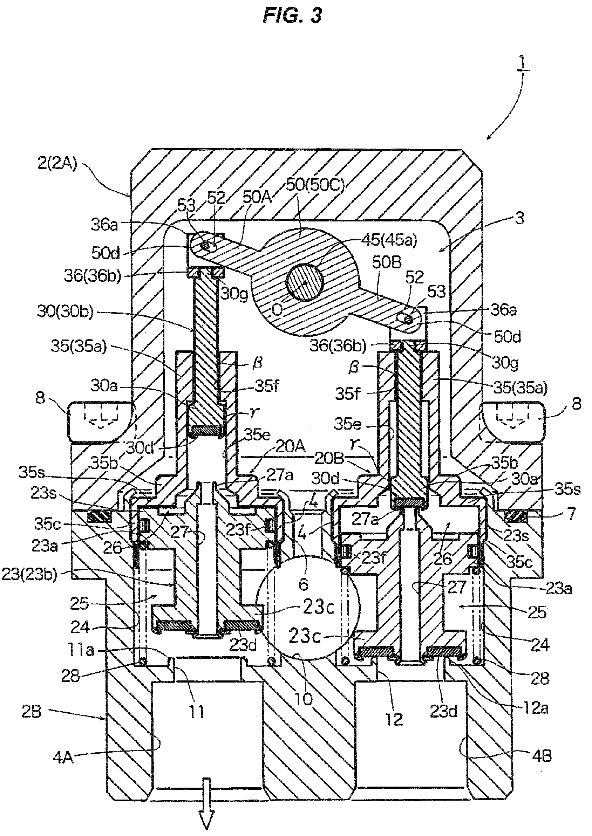

Fig. 1 is a front elevational view showing an embodiment (a first embodiment) of a direction switching valve in accordance with the present invention, Fig. 2 is a cross sectional view along a line X-X in Fig. 1, and Fig. 3 is a cross sectional view along a line Y-Y in Fig. 2.

A direction switching valve 1 in accordance with an illustrated first embodiment is used, for example, in place of two electromagnetic valves mentioned above in the heat pump type cooling and heating system such as the car air conditioner or the like which is demanded to simultaneously distribute the refrigerant from the compressor, and is provided with a valve main body 2 having an inflow port 10 and two outflow ports (a first outflow port 11 and a second outflow port 12), and a stepping motor 15 serving as a rotation drive source.

The valve main body 2 has a cylindrical upper housing 2A with a ceiling portion, and a closed-end cylindrical lower housing 2B which is fastened and fixed to a lower side of the upper housing 2A by four bolts 8 with hexagonal holes while pinching a seal member (an O-ring) 7. An upper chamber 3 is defined within the upper housing 2A, and the lower housing 2B is provided in its front face side with an inflow port 10 formed as a transverse hole, and is provided in its lower face side with a first outflow port 11 and a second outflow port 12 formed as a vertical hole shape.

The stepping motor 15 is attached to a front face side of the upper housing 2A in a state of laying down transversely. The stepping motor 15 has a base plate portion 41 which is screwed and fixed to an upper front surface portion of the upper housing 2A, a cylindrical retaining and guiding member 42 which is pressed into and fixed to the base plate portion 41, a refrigerant sealing can 18 which is bonded by welding in its lower end portion to the base plate portion 41, a rotor 16 which is arranged in an inner peripheral side of the can 18, and a stator coil 17 which is outward fitted to an outer periphery of the can 18, and an air gap α is formed between the stator coil 17 and the rotor 16. A paradox planetary gear reduction mechanism 40 is additionally provided within the motor 15, and is structured such that a rotation of an output shaft 43 of the motor 15 (an output shaft of the paradox planetary gear reduction mechanism 40) is transmitted to a connection rotating shaft 45 which is rotatably supported to the upper housing 2A. In this case, the present embodiment is structured such that a rotation of the rotor 16 is reduced to about 1/45 so as to be output by the planetary gear type speed reducing mechanism 40.

The connection rotating shaft 45 is constructed by a large diameter portion 45a which is supported to a bearing 46 and a small diameter portion 45b which is supported by a bearing 47, and a seesaw type oscillating arm 50 is integrally fixed to a small diameter portion side end portion of the large diameter portion 45a of the connection rotating shaft 45 (within the upper chamber 3) in accordance with a press fit, a spline fitting, an adhesive bonding or the like. The seesaw type oscillating arm 50 has a rotation axis O of the motor 15 as a supporting point, and is constructed by a short cylindrical center portion 50C which is outward fitted and fixed to the connection rotating shaft 45, and arm portions 50A and 50B which protrude symmetrically sideward from the center portion 50 and have the same length. An outer end portion of each of the arm portions 50A and 50B is provided with a thick center portion 50d in which a long hole 52 extending in a transverse direction is formed, and thin side plate portions 50e and 50e.

The lower housing 2B is provided right and left side by side with lower chambers 4 which pass through up and down and are formed as a stepped vertical hole. A first control valve 20A is arranged in the lower chamber 4 in a left side in Fig. 3, the first outflow port 11 with the valve seat 11a is provided in a lower portion thereof, a second control valve 20B is arranged in the lower chamber 4 in a right side, and the second outflow port 12 with the valve seat 12a is provided in a lower portion thereof.

The first control valve 20A and the second control valve 20B have the same basic structure, and each of them is structured as a pilot type valve. A description will be given below mainly of the first control valve 20A (as a representative). The first control valve 20A (20B) is provided with a piston type main valve body 23, a fitting and inserting chamber 24 to which the main valve body 23 is slidably fitted and inserted, and comparted into a back pressure chamber 26 and a main valve chamber 25 by the main valve body 23, a pilot passage 27 for releasing a pressure in the back pressure chamber 26 to the outflow port 11 (12), a pilot valve body 30 having a valve rod portion 30b which is connected to the vicinity of an outer end of the seesaw type oscillating arm 50 and provided for opening and closing the pilot passage 27, and a tubular guide member 35 to which the pilot valve body 30 is slidably fitted and inserted.

In more detail, the tubular guide member 35 is formed as a stepped cylindrical shape, and is constructed by a large diameter portion 35c (defining an upper portion of the fitting and inserting chamber 24) which is fitted into an upper portion of the lower chamber 4 so as to be fixed by caulking, and in which the main valve body 23 is slidably fitted and inserted to an inner periphery thereof, an intermediate portion 35b, and a small diameter guide portion 35a to which the pilot valve body 30 is slidably fitted and inserted, in this order from the below.

The back pressure chamber 26 is formed in an upper side of the main valve body 23 in the fitting and inserting chamber 24, and the main valve chamber 25 is formed in a lower side of the main valve body 23. The main valve body 23 has an upper large diameter portion 23a, an intermediate small diameter portion 23b and a valve body portion 23c. An annular seal member 23d made of a rubber on a Teflon (registered trademark) or the like is fixed, for example, by caulking to a lower surface side of the valve body portion 23c. The annular seal member 23d comes into contact with and is away from the valve seat 11a (12a) so as to open and close the inflow port 11 (12). Further, an upper end outer peripheral portion of the large diameter portion 23a of the main valve body 23 is provided in a protruding manner with an annular convex portion 23s which comes into contact with a ceiling stopper portion 35s of a tubular guide member 35 (the fitting and inserting chamber 24) so as to define a maximum lift position of the main valve body 23, and a seal member (a piston ring) 23f is further installed to an outer periphery of the large diameter portion 23a. Further, a valve opening spring 28 constructed by a compression coil spring is installed in a compressed manner between the upper large diameter portion 23a and the outer peripheral portion of the valve seat 11a (12a) in order to energize the main valve body 23 upward (in a valve opening direction).

On the other hand, a pilot passage 27 with a valve seat 27a for releasing the pressure in the back pressure chamber 26 to the outflow port 11 (12) is provided in a penetrating manner in a center portion of the main valve body 23, and the pilot valve body 30 is fitted and inserted to the tubular guide member 35 so as to be slidable in a vertical direction in such a manner as to come into contact with and be away from the valve seat 27a for opening and closing the pilot passage 27. The pilot valve body 30 has a valve body portion 30a and a valve rod portion 30b which has a smaller diameter than the valve body portion 30a, and a circular seal member 30b made of a rubber or a Teflon (registered trade mark) is fixed by caulking to a lower surface side of the valve body portion 30a. The seal member 30d comes into contact with and is away from the valve seat 27a so as to open and close the pilot passage 27.

In this case, in the direction switching valve 1 in accordance with the present embodiment, the inflow port 10 is formed between the main valve chambers 25 and 25 of the first control valve 20A and the second control valve 29B. The inflow port 10 is communicated with each of the main valve chambers 25 and 25 of the first control valve 20A and the second control valve 20B, and is also communicated with the upper chamber 3 via a central insertion hole 6. The inflow port 10, both the right and left main valve chambers 25 and 25, and the upper chamber 3 are filled with a refrigerant having a high pressure (a uniform pressure).

Further, within the small diameter guide portion 35a of the tubular guide member 35, there are formed a large inner diameter portion 35e to which the valve body portion 30a of the pilot valve body 30 is slidably fitted and inserted, and a small inner diameter portion 35f to which the valve rod portion 30b is slidably fitted and inserted, and a slide surface gap $\beta$ which is formed between the valve rod portion 30b and the small inner diameter portion 35f, and a slide surface gap $\gamma$ which is formed between the valve body portion 30a and the large inner diameter portion 35e are used as a pressure equalizing passage which conducts the pressure in the inflow port 10 to the main valve chamber 25 to the back pressure chamber 26 via the upper chamber 3.

On the other hand, the valve rod portion 30b of the pilot valve body 30 is connected to an outer end portion in a lateral direction of the seesaw type oscillating arm 50 via a connecting member 36 which is formed as a transversely C-shaped form. In detail, a convex portion 30g is provided in a protruding manner in an upper end of the valve rod portion 30b, and a bottom side portion 36b of the connecting member 36 is fixed to the convex portion 30g in accordance with a press fit, an adhesive bonding or the like, and both side plate portions 36a and 36a of the connecting member 36 are inserted between a thick center portion 50d and thin side plate portions 50e and 50e in an outer end portion of the seesaw type oscillating arm 50. Between both the side plate portions 36a and 36a of the connecting member 36, a pin 53 is formed in the thick center portion 50d and is built in a state of inserting through a long hole 52 in accordance with a press fit or the like.

Accordingly, if the oscillating arm 50 is rotated (oscillated) in a clockwise direction, for example, from a state (a position) in which both the arm portions 50A and 50B of the seesaw type oscillating arm 50 are in a horizontal state (position), the pilot valve body 30 of the first control valve 20A which is connected to an outer end portion of the left arm portion 50A is pulled up, and the pilot valve body 30 of the second control valve 20B which is connected to an outer end portion of the right arm portion 50B is pushed down. In the present embodiment, the seesaw type oscillating arm 50 is structured, for example, such that both the arm portions 50A and 50B are rotated (oscillated) at 20 degree to the maximum respectively up and down from a horizontal position, totally in a range of 40 degree.

Further, in the first control valve 20A and the second control valve 20B each of which is formed as the pilot type valve shape, on the assumption that the pressure in the main valve chamber 25 is set to P1, the pressure in the back pressure chamber 26 is set to P2, the pressure in the outflow ports 11 and 12 is set to P3, a horizontal cross sectional area of the back pressure chamber 26 (a pressure receiving area of the main valve body 23) is set to Ap, a horizontal cross sectional area of the outflow ports 11 and 12 is set to Av, an energizing force of the valve opening spring 28 is set to Pf, a force pushing up the main valve body 23 is defined to be a valve opening force, and a force pushing down the main valve body 23 is defined to be a valve closing force, a valve opening condition of the first control valve 20A and the second control valve 20B is as follows.

$$\text{Valve closing force} = P2 \times Ap < \text{valve opening force} = P1 \times (Ap - Av) +$$

$$P3 \times Av + Pf$$

In the direction switching valve 1 structured as mentioned above, if the motor 15 is excited in accordance with a predetermined mode, and (both the arm portions 50A and 50B of) the seesaw type oscillating arm 50 is set to a state in which it is rotated at 20 degree in a clockwise direction from a horizontal position, for example, as shown in Fig. 3, the pilot valve body 30 of the first control valve 20A is pulled up to the maximum rising position and the pilot passage 27 is fully opened, and the pilot valve body 30 of the second control valve 20B comes to a state in which it is pushed up to a position which makes the pilot passage 27 fully closed. In accordance with this, in the first control valve 20A, [valve closing force < valve opening force] is established, the main valve body 23 moves up to a maximum lift position at which the annular convex portion 23a comes into contact with the ceiling stopper portion 35s, and the first outflow port 11 is fully opened. On the contrary, the main valve body 23 of the second control valve 20B keeps closing the second outflow port 12. Accordingly, the refrigerant from the inflow port 10 flows only to the first outflow port 11 in this state.

In this case, the current application to the motor 15 is stopped in this state, however, two control valves 20A and 20B maintain the above state. Further, in this state, the pressure in the inflow port 10 or the main valve chamber 25 is introduced to the second control valve 20B and the back pressure chamber 26 via the slide surface gap β which is formed between the valve rod portion 30b and the small inner diameter portion 35f, and the slide surface gap γ which is formed between the valve body portion 30a and the large inner diameter portion 35e, and the pressures in the main valve chamber 25 and the back pressure chamber 26 are approximately equalized. Accordingly, [valve closing force > valve opening force] is established.

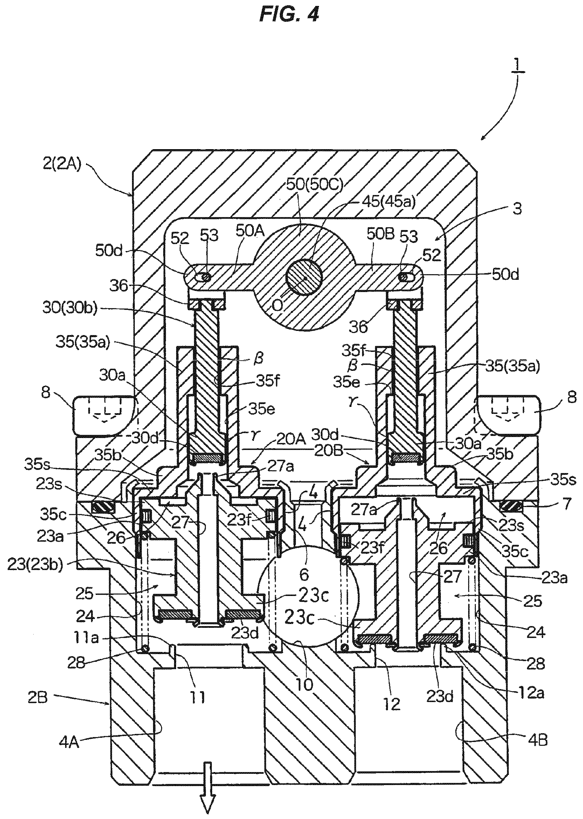

Subsequently, when the motor 15 is excited in accordance with a predetermined mode, and the seesaw type oscillating arm 50 is rotated (oscillated) at 20 degree in a counterclockwise direction from a position shown in Fig. 3 and is stopped at a horizontal position as shown in Fig. 4, the pilot valve body 30 is pushed down in the first control valve 20A, however, the pilot passage 27 is kept opening, the main valve body 23 is kept lifting to the maximum, and the first outflow port 11 is kept fully open.

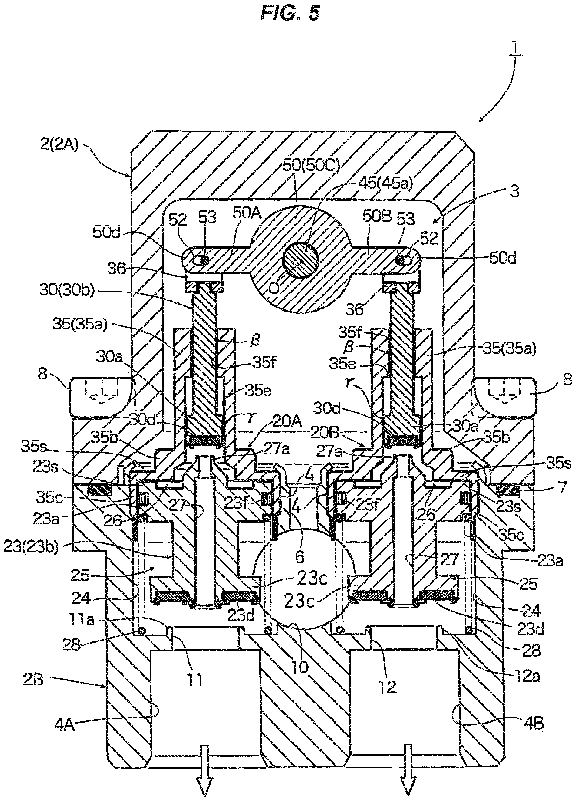

On the contrary, in the second control valve 20B, the pilot valve body 30 is pulled up and the pilot passage 27 is opened, however, since the pressure in the back pressure chamber 26 is not sufficiently released at a time point (a time instance) of being set to this state, [valve closing force > valve opening force] is established, the second outflow port 12 is kept being closed by the main valve body 23, however, just after it (for example, after about one second), the pressure in the back pressure chamber 26 is released as shown in Fig. 5 so as to establish [valve closing force < valve opening force], the main valve body 23 moves up to the maximum lift position at which the annular convex portion 23s comes into contact with the ceiling stopper portion 35s, and the second outflow port 12 becomes fully open. In accordance with this, the refrigerant from the inflow port 10 flows to both of the first outflow port 11 and the second outflow port 12. In this case, the current application to the motor 15 is stopped in this state, however, two control valves 20A and 20B both maintain the full-open state.

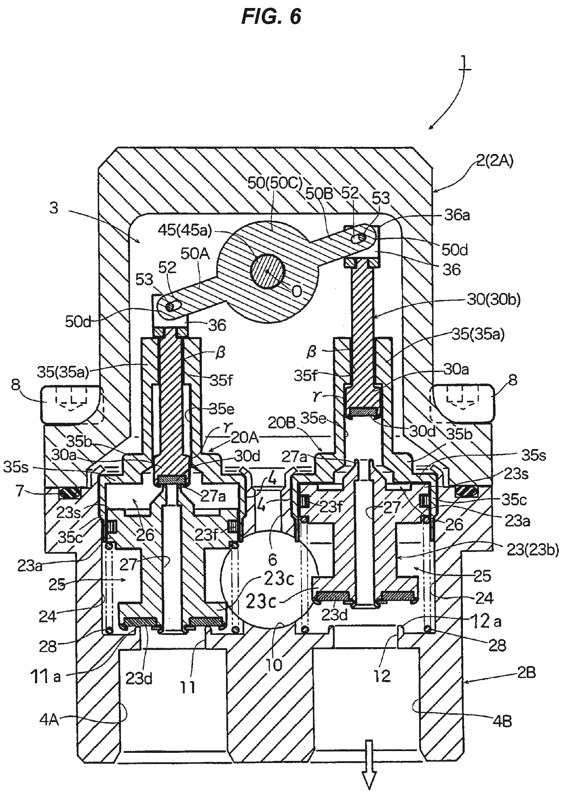

Next, when the seesaw type oscillating arm 50 is further rotated (oscillated) at 20 degree in a counterclockwise direction from the horizontal position, as shown in Fig. 6, from a state in which two outflow ports 11 and 12 are both fully opened, as shown in Fig. 5, there comes such a state that the pilot valve body 30 of the first control valve 20A is pushed down to a position at which it fully closes the pilot passage 27, as well as the pilot valve body 30 of the second control valve 20B is pulled up to the maximum rising position, and the pilot passage 27 is fully opened. Accordingly, [valve closing force < valve opening force] is established in the second control valve 20B, the main valve body 23 moves up to the maximum lift position at which the annular convex portion 23s comes into contact with the ceiling stopper portion 35s, and the second outflow port 12 is fully opened. On the contrary, in the first control valve 20A, [valve closing force > valve opening force] is established, and the main valve body 23 closes the first outflow port 11. Accordingly, in this state, the refrigerant from the inflow port 10 flows only to the second outflow port 12. The main valve body 23 can be seated on the valve seat 11a by being pressed to the pilot valve body 30 before coming to [valve closing force > valve opening force]

The main valve body 23 seats on the valve seat 11a, and is thereafter pressed to the valve seat 11a side by the pilot valve body 30, however, since the pilot valve body 30 is connected to the actuator (the stepping motor) via the paradox planetary gear reduction mechanism 40, the main valve body 23 is not opened even if a strong inverse pressure is applied to the main valve body 23. In other words, since the paradox planetary gear reduction mechanism 40 does not rotate even if a torque is applied to an output shaft side, a forcible valve opening is inhibited even if a strong inverse pressure is applied to the main valve body 23, and a valve closed state can be maintained.

In this case, the current application to the motor 15 is stopped in this state, however, two control valves 20A and 20B maintain the state mentioned above. Further, in this state, the pressure in the inflow port 10 or the main valve chamber 25 is introduced through the upper chamber 3 to the back pressure chamber 26 of the first control valve 20A via the slide surface gap β which is formed between the valve rod portion 30b and the small inner diameter portion 35f, and the slide surface gap γ which is formed between the valve body portion 30a and the large inner diameter portion 35e, and the pressures in the main valve chamber 25 and the back pressure chamber 26 are approximately equalized. On the other hand, since the valve seat 11 a is closed by the valve body portion 23c, [valve closing force > valve opening force] is established.

As mentioned above, in the direction switching valve 1 in accordance with the present embodiment, since the pilot type valve mode is employed as two control valves 20A and 20B, and the seesaw type oscillating arm 50 serving as the inverse drive mechanism which drives two control valves 20A and 20B so as to open and close in the inverse direction to each other is arranged between the motor 15 and two control valves 20A and 20B, it is possible to selectively open and close two outflow ports 11 and 12 by rotating (oscillating) the seesaw type oscillating arm 50 within a predetermined angle, and it is possible to fully open both of two control valves 20A and 20B (two outflow ports 11 and 12) by stopping the seesaw type oscillating arm 50 at a specific rotating (oscillating) position, that is, a horizontal position.

Accordingly, as mentioned above, the direction switching valve 1 in accordance with the present embodiment can be used in place of two electromagnetic valves in the heat pump type cooling and heating system which is demanded to distribute the refrigerant from the compressor simultaneously to two heat exchangers. In this case, in the direction switching valve 1 in accordance with the present embodiment, since the full-open state is maintained without exciting, after both two outflow ports 11 and 12 are fully opened, it is possible to achieve an energy saving or the like in comparison with the case that two electromagnetic valves are used.

Further, since the pilot type valve mode is employed as two control valves 20A and 20B, it is possible to open and close the outflow ports 11 and 12 having a large bore diameter by a small drive force. In addition, since the seesaw type oscillating arm 50 is used as the inverse drive mechanism, it is possible to achieve a high lift of the pilot valve body 30 and the main valve body 23. Further, since the opening and closing of two control valves 20A and 20B can be achieved only by rotating the seesaw type oscillating arm 50 at a small angle (for example, within 40 degree), it is possible to rapidly carry out the flow path switching in comparison with the conventional type three-way switching valve or the like, even if the stepping motor 15 having a comparatively compact structure (small output) (plus the planetary gear type speed reducing mechanism 40) as the rotation drive source, and a flow path switching response is improved.

In this case, it goes without saying that the direction switching valve in accordance with the present invention is not limited to the structure of the direction switching valve 1 in accordance with the first embodiment mentioned above, and various modification can be applied.

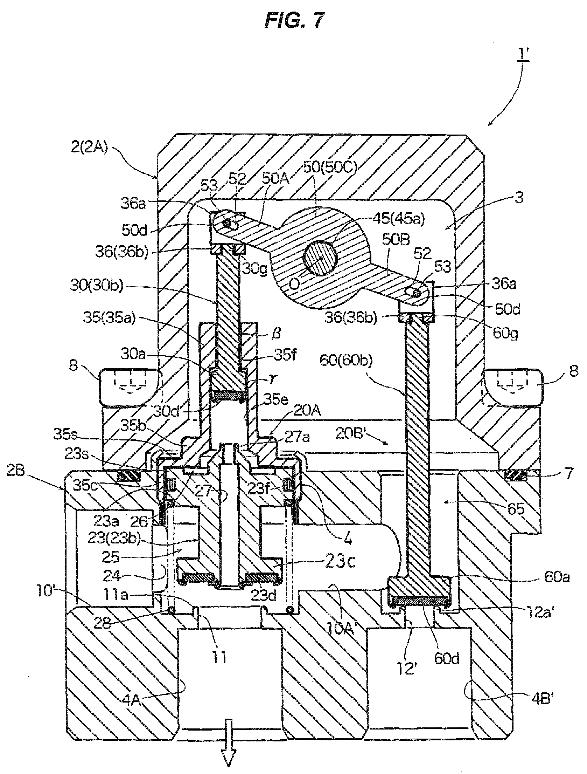

For example, in the first embodiment, two control valves 20A and 20B are both formed as the pilot type valve mode, however, a second control valve 20B' in a right side may be substituted by a direct moving type, such as a direction switching valve 1' in accordance with a second embodiment shown in Fig. 7. The second control valve 20B' is structured such that a valve body 60 having a valve body portion 60a opening and closing a second outflow port 12' with a comparatively small bore diameter and a valve rod portion 60b is connected to the outer end of the arm portion 50B in the right side of the seesaw type oscillating arm 50 in the same manner as the pilot valve body 30 mentioned above. Two outflow ports 11 and 12' can be selectively opened and closed by rotating the seesaw type oscillating arm 50 within the predetermined angle range in the same manner as the first embodiment, and both of two control valves 20A and 20B' (two outflow ports 11 and 12') can be fully opened by stopping the seesaw type oscillating arm 50 at the horizontal position, thereby to achieve the same effect as the first embodiment. Further, since the second control valve 20B' can linearly change an effective opening area (an opening degree) of the second outflow port 12' in correspondence to an angle of rotation of the seesaw type oscillating arm 50, it can be used as a flow rate control valve.

In this case, an upward and downward motion of the valve body 60 is carried out in such a manner that the valve body portion 60a is guided by an inner wall of the main valve chamber 65, however, if a distance between the valve body portion 60a and the inner wall of the main valve chamber 65 is made narrower than a distance such a degree shown in Fig. 7, it is possible to further stably carry out the guide. Further, a guide means for sliding the valve rod portion 60b up and down may be provided independently in the inner portion of the valve main body 2.

Since the valve body 60 in the second embodiment is also connected to the actuator via the paradox planetary gear reduction mechanism, a forcible valve opening is inhibited even if the strong inverse pressure is applied to the valve body portion 60a after the valve body portion 60a provided in the leading end of the valve body 60 seats on the valve seat 12a' so as to close valve.

Further, in the embodiment mentioned above, the seesaw type oscillating arm 50 is employed as the drive mechanism, however, a gear train may be provided in place of it. Specifically, for example, a drive gear may be provided in the connection rotating shaft 45, driven gears (train) may be provided in right and left side of the drive gear, and two control valves 20A and 20B may be driven so as to open and close in an inverse direction to each other by the right and left driven gears (train).

**Claims**

**1.** A direction switching valve (1) comprising:

a valve main body (2) which is provided with an inflow port (10) and two outflow ports (11;12);
two control valves (20A;20B) each of which is arranged between said inflow port (10) and two outflow ports (11; 12);
a single rotation drive source (15) for driving so as to open and close said two control valves (20A;20B); and
said two outflow ports (11;12) are selectively openable and closable by said two control valves (20A;20B),
wherein at least one of said two control valves (20A;20B) is constructed by a pilot type valve, and an inverse drive mechanism (50) driving said two control valves (20A;20B) so as to open and close in an inverse direction to each other is provided between said rotation drive source (15) and said two control valves (20A;20B),
wherein the control valve (20A;20B) constructed by said pilot type valve is provided with a piston type main valve body (23), a fitting insertion chamber (24) to which said main valve body (23) is slidably fitted and inserted, said fitting insertion chamber (24) is provided in said valve main body (2) and is comparted into a back pressure chamber (26) and a main valve chamber (25) by said main valve body (23), a pilot passage (27) provided in said main valve body (23) for releasing a pressure in said back pressure chamber (26) to said outflow port (11;12);

**characterized in that** the control valve (20A; 20B) is further provided with a pilot valve body (30) for opening and closing said pilot passage (27), and a tubular guide portion (35) to which said pilot valve body (30) is slidably fitted and inserted, and a sliding surface gap ($\beta;\gamma$) formed between said pilot valve body (30) and said tubular guide portion (35) is used as a pressure equalizing passage which conducts the pressure in said inflow port (10) or the main valve chamber (25) to said back pressure chamber (26).

2. A direction switching valve (1) as claimed in claim 1, wherein said two control valves (20A;20B) are both fully openable by stopping said inverse drive mechanism (50) in a specific state.

3. A direction switching valve (1) as claimed in any one of claims 1 to 2, wherein a seesaw type oscillating arm (50) serving as said inverse drive mechanism is provided between said two control valves (20A;20B) and said rotation drive source (15).

4. A direction switching valve (1) as claimed in any one of claims 1 to 2, wherein a gear train serving as said inverse drive mechanism (50) is provided between said two control valves (20A;20B) and said rotation drive source (15).

5. A direction switching valve (1) as claimed in any one of claims 1 to 4, wherein a speed reducing mechanism (40) is provided between said rotation drive source (15) and said inverse drive mechanism (50).

6. A direction switching valve (1) as claimed in claim 5, wherein said speed reducing mechanism is constructed by a paradox planetary gear reduction mechanism (40).

7. A direction switching valve (1) as claimed in any one of claims 1 to 6, wherein a stepping motor (15) is used as said rotation drive source.

8. A direction switching valve (1) as claimed in claim 6, wherein a stepping motor (15) is used as said rotation drive source, and said paradox planetary gear reduction mechanism (40) is provided additionally within said stepping motor.

**Patentansprüche**

1. Ein Richtungsschaltventil (1), das aufweist:

einen Ventilgrundkörper (2), der mit einer Einflussöffnung (10) und zwei Ausflussöffnungen (11; 20) ausgestattet ist;
zwei Steuerventile (20A; 20B), wobei jedes von ihnen zwischen der besagten Einflussöffnung (10) und den zwei Ausflussöffnungen (11; 12) angeordnet ist;
eine einzige Rotationsantriebsquelle (15) zum Antreiben, so dass die zwei Steuerventile (20A; 20B) geöffnet und geschlossen werden; wobei besagte zwei Ausflussöffnungen (11; 12) durch besagte zwei Steuerventile (20A; 20B) separat geöffnet und geschlossen werden können,
wobei zumindest eines der besagten zwei Steuerventile (20A; 20B) durch ein Pilotventil-artiges Ventil aufgebaut ist, und wobei ein gegenläufiger Antriebsmechanismus (50) zum Antreiben der besagten zwei Steuerventile (20A; 20B), so dass diese relativ zueinander gegenläufig öffnen und schließen, zwischen besagter Rotationsantriebsquelle (15) und den besagten zwei Steuerventilen (20A; 20B) vorgesehen ist,
wobei das Steuerventil (20A; 20B), das durch besagtes Pilotventil-artiges Ventil aufgebaut ist, mit einem kolbenartigen Hauptventilkörper (23) ausgestattet ist und eine Einpass- und Einsetzkammer (24), zu der besagter Hauptventilkörper (23) gleitend eingepasst und eingesetzt ist, wobei die besagte Einpass- und Einsetzkammer (24) in besagtem Ventilgrundkörper (2) vorgesehen und durch den besagten Hauptventilkörper (23) in eine Gegendruckkammer (26) und eine Hauptventilkammer (25) unterteilt ist, ein Pilot-Durchlass (27), der in besagtem Hauptventilkörper vorgesehen ist zum Entlasten eines Drucks in besagter Gegendruckkammer (26) zu besagter Auslassöffnung (11; 12) hin;
**dadurch gekennzeichnet, dass** das Steuerventil (20A; 20B) weiterhin mit einem Pilotventilkörper (30), um besagten Pilotdurchlass (27) zu öffnen und zu schließen, und mit einem röhrenförmigen Führungsbereich (35), zu dem besagter Pilotventilkörper (30) gleitend eingepasst und eingesetzt ist, ausgestattet ist, und dass ein Gleitflächenzwischenraum (β; γ), der zwischen besagtem Pilotventilkörper (30) und besagtem röhrenförmigen Führungsbereich (35) ausgebildet ist, als ein Druckausgleichsdurchlass benutzt wird, der den Druck in besagter Einlassöffnung (10) oder der Hauptventilkammer (25) zu besagter Gegendruckkammer (26) leitet.

2. Richtungsschaltventil (1) gemäß Anspruch 1,
wobei besagte zwei Steuerventile (20A; 20B) durch Anhalten des besagten gegenläufigen Antriebsmechanismus (50) in einem bestimmten Zustand beide voll geöffnet werden können.

3. Richtungsschaltventil (1) wie in einem der Ansprüche 1 bis 2 beansprucht,
wobei ein wippenartiger Schwingarm (50), der als besagter gegenläufiger Antriebsmechanismus dient, zwischen besagten zwei Steuerventilen (20A; 20B) und besagter Rotationsantriebsquelle (15) angeordnet ist.

4. Richtungsschaltventil (1) wie in einem der Ansprüche 1 bis 2 beansprucht,
wobei ein Antriebsstrang, der als besagter gegenläufiger Antriebsmechanismus dient, zwischen besagten zwei Steuerventilen (20A; 20B) und besagter Antriebsquelle (15) angeordnet ist.

5. Richtungsschaltventil (1) wie in einem der Ansprüche 1 bis 4 beansprucht,
wobei ein Geschwindigkeits-Reduktionsmechanismus (40) zwischen besagter Rotationsantriebsquelle (15) und besagtem gegenläufigem Antriebsmechanismus (50) angeordnet ist.

6. Richtungsschaltventil (1) wie in Anspruch 5 beansprucht,
wobei besagter Geschwindigkeits-Reduktionsmechanismus (40) als ein Reduktionsmechanismus in Form eines paradoxen Planetengetriebes (40) aufgebaut ist.

7. Richtungsschaltventil (1) wie in einem der Ansprüche 1 bis 6 beansprucht, wobei ein Schrittmotor (15) als besagte Rotationsantriebsquelle verwendet wird.

8. Richtungsschaltventil (1) wie in Anspruch 6 beansprucht,
wobei ein Schrittmotor (15) als besagte Rotationsantriebsquelle verwendet wird, und wobei besagter paradoxer Planetengetriebe-Reduktionsmechanismus (40) zusätzlich innerhalb des besagten Schrittmotors vorgesehen ist.

## Revendications

1. Valve de changement de direction (1) comprenant:

un corps principal de valve (2) qui est fourni avec un orifice d'admission (10) et deux orifices de sortie (11; 12);
deux valves de régulation (20A; 20B), chacune d'eux est arrangée entre ledit orifice d'admission (10) et les deux orifices de sortie (11; 12);
une seule source d'entraînement de rotation (15) pour entraîner afin d'ouvrir et fermer lesdites valves de régulation (20A; 20B); et lesdits deux orifices de sortie (11; 12) pouvant être ouverts et fermés sélectivement par lesdites deux valves de régulation (20A; 20B);
dans lequel au moins une desdites deux valves de régulation (20A; 20B) est construite par une valve de type pilote, et un mécanisme d'entraînement opposé (50) qui entraîne lesdites deux valves de régulation (20A; 20B) afin de les ouvrir et fermer de manière opposée l'une par rapport à l'autre est pourvu entre ladite source d'entraînement de rotation (15) et lesdites deux valves de régulation (20A; 20B),
dans lequel la valve de régulation (20A; 20B) qui est construite par ladite valve de type pilote est pourvue avec un corps de valve principale (23) de type piston, une chambre d'emboîtement et insertion (24) à laquelle ledit corps de valve principale (23) est emboîté et inséré de manière coulissante, ladite chambre d'emboîtement et insertion (24) étant pourvue dans ledit corps de valve principale (23) et étant répartie en une chambre de contre-pression (26) et une chambre de valve principale (25) par ledit corps de valve principale (23), un passage pilote (27) pourvu dans ledit corps de valve principale (23) pour relâcher une pression dans ladite chambre de contre-pression (26) vers ledit orifice de sortie (11; 12);
**caractérisée en ce que** la valve de régulation (20A; 20B) est en outre pourvue avec un corps de valve pilote (30) afin d'ouvrir et fermer ledit passage pilote (27), et une portion tubulaire de guidage (35), à laquelle ledit corps de valve pilote (30) est emboîté et inséré de manière coulissante, et un interstice de surface coulissante (β; γ), qui est formée entre ledit corps de valve pilote (30) et ladite portion tubulaire de guidage (35) est utilisé comme un passage d'équilibrage de pression qui dirige la pression dans ledit port d'admission (10) ou la chambre de valve principale (25) vers ladite chambre de contre-pression (26).

2. La valve de changement de direction (1) selon revendication 1, dans laquelle lesdites deux valves de régulation (20A; 20B) peuvent être ouvertes complètement par arrêter ledit mécanisme d'entraînement opposé (50) dans un état déterminé.

3. La valve de changement de direction (1) selon chacune des revendications 1 à 2, dans laquelle un bras oscillant de type bascule (50) qui sert comme ledit mécanisme d'entraînement opposé (50) est pourvu entre lesdits deux valves de régulation (20A; 20B) et ladite source d'entraînement de rotation (15).

4. La valve de changement de direction (1) selon chacune des revendications 1 à 2, dans laquelle un train d'engrenages qui sert comme ledit mécanisme d'entraînement opposé (50) est pourvu entre lesdits deux valves de régulation (20A; 20B) et ladite source d'entraînement de rotation (15).

5. La valve de changement de direction (1) selon chacune des revendications 1 à 2, dans laquelle un mécanisme réducteur de vitesse (40) est pourvu entre ladite source d'entraînement de rotation (15) et ledit mécanisme d'entraînement opposé (50).

6. La valve de changement de direction (1) selon revendication 5, dans laquelle ledit mécanisme réducteur de vitesse (40) est construit par un mécanisme réducteur de vitesse épicycloïdal paradoxal (40).

7. La valve de changement de direction (1) selon une des revendications 1 à 6, dans laquelle un moteur pas à pas (15) est utilisé comme la source d'entraînement de rotation.

8. La valve de changement de direction (1) selon revendication 6, dans laquelle un moteur pas à pas (15) est utilisé comme la source d'entraînement de rotation, et le mécanisme réducteur de vitesse épicycloïdal paradoxal (40) est en plus pourvu dedans le moteur pas à pas (15).

# FIG. 1

## FIG. 2

**FIG. 3**

## FIG. 4

EP 2 515 015 B1

**FIG. 5**

**FIG. 6**

EP 2 515 015 B1

FIG. 7

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9295506 A
- GB 1549195 A
- WO 2010141013 A1
- EP 2182260 A1
- GB 1223466 A
- FR 2211097 A5